Europäisches Patentamt

**European Patent Office**

Office européen des brevets

(11) Numéro de publication: **0 254 622**
**B1**

# FASCICULE DE BREVET EUROPEEN

(45) Date de publication du fascicule du brevet:
**12.12.90**

(51) Int. Cl.⁵: **H04N 11/06, H04N 9/04**

(21) Numéro de dépôt: **87401580.3**

(22) Date de dépôt: **06.07.87**

(54) Procédé d'élaboration d'un signal standard de télévision en couleurs, et chaîne de prise de vues utilisant ce procédé.

(30) Priorité: **25.07.86 FR 8610824**

(43) Date de publication de la demande:
**27.01.88 Bulletin 88/4**

(45) Mention de la délivrance du brevet:
**12.12.90 Bulletin 90/50**

(84) Etats contractants désignés:
**DE GB IT**

(56) Documents cités:
**US-A- 3 087 011**
**US-A- 4 536 795**

(73) Titulaire: **THOMSON VIDEO EQUIPEMENT, 17, rue du Petit Albi, F-95800 Cergy Saint Christophe(FR)**

(72) Inventeur: **Fedorczak, Christian, THOMSON-CSF SCPI 19, avenue de Messine, F-75008 Paris(FR)**
Inventeur: **Dujardin, Stéphane, THOMSON-CSF SCPI 19, avenue de Messine, F-75008 Paris(FR)**

(74) Mandataire: **Courtellemont, Alain et al, THOMSON-CSF SCPI, F-92045 PARIS LA DEFENSE CEDEX 67(FR)**

## Description

La présente invention se rapporte, en particulier, à un procédé d'élaboration d'un signal standard de télévision en couleurs applicable à une chaîne de prise de vues où la caméra comporte un capteur solide à réseau coloré et doit être d'un poids et d'un volume aussi faibles que possible.

Il existe dans le commerce des capteurs solides pour caméras de télévision en couleurs. Ces capteurs comportent une grille de L lignes de N éléments photosensibles du type photosite, et chaque élément est associé à un filtre coloré qui est, le plus généralement, rouge, vert ou bleu ; un circuit de lecture à éléments à couplage de charge (charge coupled device ou CCD dans la littérature anglosaxonne) permet de lire chacun des points constitués par un élément photosensible et de convertir l'image projetée sur le capteur par l'objectif de la caméra, en un signal vidéo. En plus du capteur et de son circuit de lecture, les fabricants proposent le circuit d'horloge et les circuits de traitement propres au circuit de lecture, qui permettent d'effectuer le tri des couleurs et le traitement des signaux afin de fabriquer le signal vidéo au standard désiré : NTSC, PAL, SECAM.

Dans ces chaînes de prise de vues, l'électronique associée à la caméra est relativement importante et est donc une gêne à réduction du poids et du volume de l'appareil de prise de vues.

La présente invention a pour but de réduire cet inconvénient en ne conservant dans l'appareil de prise de vues que le strict minimum de circuits pour fabriquer un signal transmissible par les canaux habituellement prévus pour l'acheminement des signaux de télévision, et sans qu'il y ait besoin de modifier ces canaux.

Ceci est possible en n'effectuant le tri des couleurs et le traitement de signaux qui suit le tri, qu'en dehors de l'appareil de prise de vues, après réception des signaux émis par l'appareil de prise de vues. Il est d'ailleurs à noter qu'ainsi la puissance de l'alimentation nécessaire à l'électronique de l'appareil de prise de vues est réduite, mais qu'une attention toute particulière doit être portée à l'élaboration du signal émis par l'appareil de prise de vues afin qu'à la réception de ce signal il soit possible de produire toutes les horloges nécessaires pour le tri des couleurs et le traitement conduisant au signal de télévision couleur standard ; en effet toute erreur de synchronisation qui, par exemple, ferait prendre un point pour son voisin ou une ligne pour sa voisine, entraînerait des inversions de couleurs.

Selon l'invention, un procédé d'élaboration d'un signal standard de télévision en couleurs à partir d'une caméra munie d'un capteur solide comportant plusieurs lignes d'éléments photosensibles ou points, est caractérisé en ce qu'il consiste à fournir un pseudo-signal formé de lignes et de trames dont les amplitudes et les durées et les impulsions de ligne et de trame sont comparables à celles d'un signal standard de télévision, et comportant, pour chaque ligne de capteur lue, une zone de suppression avec une impulsion de synchronisation ligne, puis des impulsions d'image respectivement représentatives des signaux fournis par les points de la ligne de capteur lue, en ce qu'il consiste, au moins pour une partie des lignes de capteur lues, à introduire dans la zone de suppression une salve à une fréquence propre très supérieure à la fréquence de répétition des lignes du pseudo-signal, et en ce qu'il consiste, après émission et réception du pseudo-signal, à élaborer une base de temps précise à l'aide des impulsions de synchronisation et à l'aide de la salve et à élaborer le signal standard à partir des impulsions d'image.

La présente invention sera mieux comprise et d'autres caractéristiques apparaîtront à l'aide de la description ci-après et des figures s'y rapportant qui représentent :

- la figure 1, une chaîne de prise de vues pour télévision en couleurs, selon l'invention,
- la figure 2, le schéma d'un des éléments de la figure 1,
- la figure 3, une vue partielle d'un composant utilisé dans l'élément selon la figure 2,
- la figure 4, l'allure d'un signal à la sortie de l'élément selon la figure 2,
- la figure 5, un schéma relatif à un autre des éléments de la figure 1.

Dans les différentes figures les signaux correspondants sont désignés par les mêmes repères, de plus certains des dispositifs de synchronisation précise, relevant de la technologie courante, n'ont pas été représentés en vue de rendre les dessins plus clairs et de simplifier l'exposé.

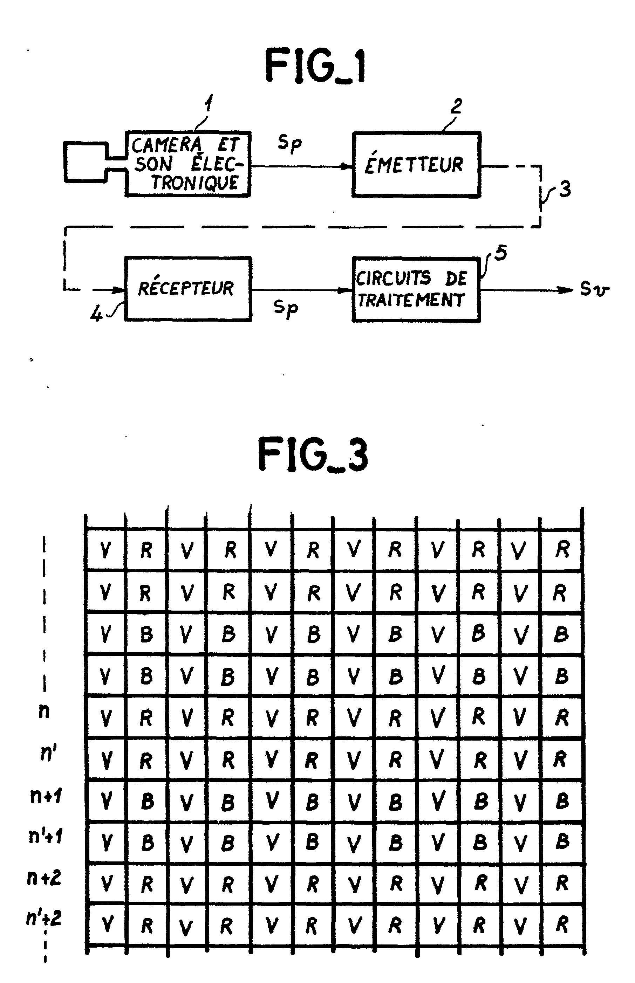

La figure 1 représente une chaîne de prise de vues pour télévision en couleurs, selon l'invention, avec en série une caméra et son électronique, 1, un émetteur, 2, une voie de transmission, 3, un récepteur, 4, et des circuits de traitement, 5, qui délivrent un signal vidéo composite, classique, de télévision en couleurs, Sv. Ce qui distingue cette figure d'un schéma habituel de chaîne de prise de vues pour télévision en couleurs c'est que la caméra et son électronique, 1, ne délivrent pas un signal de télévision du type du signal Sv, avec en particulier ses composantes de luminance et de chrominance, mais un signal de télévision, Sp, obtenu à partir du signal de caméra après un traitement aussi succinct que possible, seulement destiné à permettre sa transmission comme un véritable signal vidéo composite de télévision en couleurs. Ce signal Sp est un pseudo-signal de télévision par son allure très proche d'un signal vidéo standard (même synchronisation ligne et trame, même amplitude du signal ...), c'est pourquoi il permet d'utiliser des émetteurs, des récepteurs, des voies de transmissions prévus pour les signaux vidéo standard et, surtout, peut être créé en utilisant uniquement l'immense panoplie des circuits intégrés spécialement développés pour la télévision. Par la même occasion l'électronique associée à la caméra ainsi que l'alimentation nécessaire à cette électronique sont sérieusement réduites.

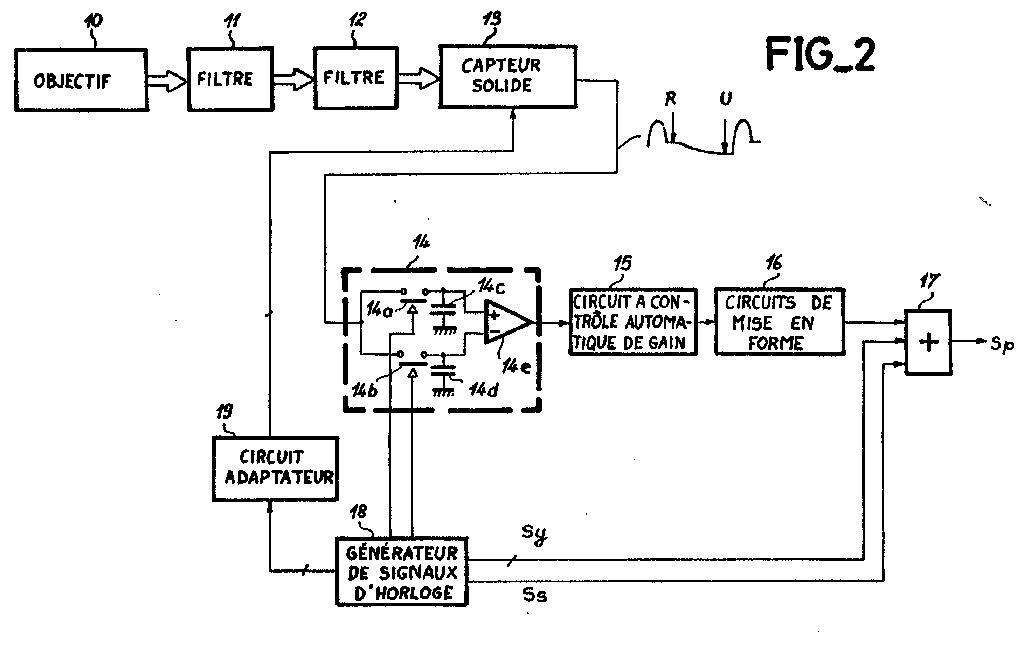

L'exemple plus précis qui est décrit à l'aide des figures 2 à 5 concerne une chaîne de prise de vues où la caméra, destinée à être montée sur une voiture de course de formule 1, pèse 580g avec son électronique, son émetteur et le convertisseur continu-continu qui lui fournit les tensions d'alimentation nécessaires en prenant l'énergie sur la batterie de la voiture. La voie de transmission 3 (figure 1) est la voie hertzienne et le signal vidéo composite Sv, toujours dans l'exemple décrit, est un signal au standard PAL. Il est à noter que le poids de 580g concerne une réalisation à l'état de prototype et que la réalisation en série qui va suivre conduira à un poids inférieur.

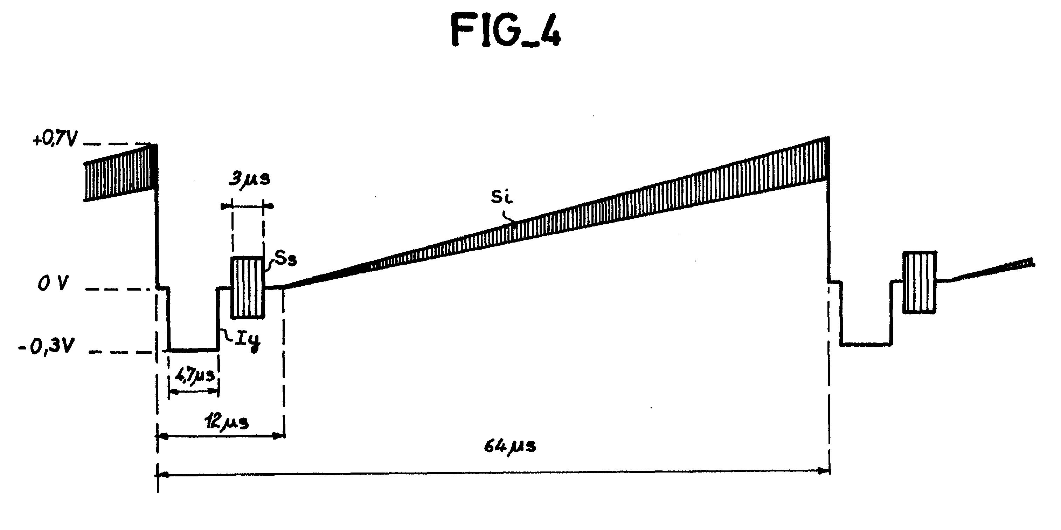

La figure 2 montre comment est réalisé l'élément 1 de la figure 1. Une caméra avec son objectif, 10, son filtre anticalorique, 11, destiné à couper le rayonnement infra-rouge qui pourrait fausser l'analyse de l'image fouirnie par l'objectif, et son filtre passe-bas optique, 12, envoie une image sur un capteur optique 13. Le capteur 13 est constitué essentiellement d'une grille d'éléments photosensibles, ou points, sur laquelle se forme l'image donnée par l'objectif 10, et de registres de lecture à éléments à couplage de charge. La grille dont une partie est représentée sur la figure 3 est une grille à 582 lignes et 500 points ou éléments photosensibles par ligne. Devant chaque élément photosensible est disposé un filtre vert, rouge ou bleu, de manière à constituer deux lignes où les points sont alternativement verts et rouges, puis deux lignes où les points sont (alternativement verts et bleus puis, à nouveau, deux lignes où les points sont alternativement verts et rouges, et ainsi de suite. Il est à noter que le filtre passe-bas 12 est destiné à créer un flou suffisant pour supprimer toutes les transitions lumineuses à la fréquence des points de la grille et, de ce fait, égaliser l'énergie lumineuse sur des points adjacents de la grille.

Un générateur de signaux d'horloge, 18, réalisé à partir de deux circuits intégrés produits par la société SONY (CX23047A qui donne les horloges de lecture et de transfert du capteur et CX7930A qui donne les signaux de synchronisation et les signaux, de service), fournit, à travers un circuit adaptateur 19, les signaux d'horloge nécessaires au transfert de l'image en un signal série relatif successivement aux différents points de la grille balayés selon un balayage en deux trames entrelacées paire et impaire ; sur la figure 3 des repères n, n+1, n+2 indiquent des lignes appartenant à l'une des trames et des repères n′, n′+1, n′+2 des lignes appartenant à l'autre trame. Ces signaux d'horloge fournis à travers le circuit 19 sont des signaux à fréquence de trame, Ft = 50 Hz, des signaux à fréquence de ligne, Fl = 15,625 kHz, et des signaux à fréquence point, Fp = 9,48 MHz, c'est-à-dire à fréquence de lecture des points d'une ligne de la grille

Pour chaque point lu, le capteur 13 délivre, comme indiqué sur la figure 2, un signal qui comporte un niveau de référence R et un niveau utile U correspondant au niveau du signal provenant du point lu. Un double échantillonneur-bloqueur, 14, déclenché au cours de l'apparition du niveau de référence, R, et du niveau utile, U, fournit un signal représentatif de la différence entre ces deux niveaux. Ce double échantillonneur-bloqueur, 14, a été représenté sur la figure 2 par deux contacteurs 14a, 14b, deux condensateurs 14c, et 14d et un amplificateur différentiel 14e ; les contacteurs 14a, 14b qui sont en fait des contacteurs électroniques, réalisent un échantillonnage à fréquence point Fp, ce qui charge respectivement les condensateurs 14c, 14d pour les amener aux niveaux R et U et l'amplificateur différentiel fournit la valeur U-R.

Un circuit à contrôle automatique de gain, 15, reçoit le signal de sortie du circuit 14 ; il permet de compenser les variations d'illumination afin de conserver un signal ayant toujours une amplitude constante en sortie à l'intérieur d'une certaine limite de variation.

Le circuit 15 est suivi d'un circuit de mise en forme 16 qui permet d'aligner le signal au noir, d'effectuer les écrétages au noir et au blanc indispensables pour obtenir un signal conforme au gabarit d'un signal vidéo standard, et d'effectuer la correction de gamma.

Au signal délivré par le circuit de mise en forme 16 sont ajoutés par le générateur 18, dans un additionneur 17, des signaux, Sy, de synchronisation ligne et de synchronisation trame et, pendant la durée de suppression ligne, un signal de salve Ss.

Le signal de salve est un signal sinusoïdal à une fréquence de répétition qui est égale à la fréquence ligne et à une fréquence propre égale à la demi fréquence point, soit Fp/2 = 4,74 MHz ; c'est une salve d'horloge similaire aux salves utilisées dans le système NTSC ou dans le système PAL. Le signal de salve a une durée de 3 μs et une amplitude crête à crête de 0,3 volts.

Comme il y a deux configuration différentes de filtres colorés (vert-bleu et vert-rouge) pour les lignes de la grille, il y a lieu d'identifier quel est la configuration de chaque ligne lue. Dans l'exemple décrit ceci est obtenu à partir du signal de synchronisation trame, V, qui sert de remise à zéro pour un compteur contenu dans le circuit de base de temps 59 ; ce computer est alimenté à fréquence ligne et sa sortie de poids faible indique si la ligne considérée est vert-bleu ou vert-rouge ; en effet, de construction, chaque ligne du capteur est, de manière immuable, une ligne vert-bleu ou une ligne vert-rouge et il suffit donc d'attribuer le niveau bas à la configuration de la première ligne pour obtenir un signal d'identification, Crb.

La figure 4 représente le signal Sp de sortie de l'additionneur 17. Ce signal, d'une durée de 64 μs par ligne lue, comporte, pendant ces 64 μs, d'abord une zone de suppression ligne de 12 μs avec une impulsion de synchronisation de ligne ly de 4,7μs et la salve Ss, puis, pendant 64 - 12 = 52 μs, un signal Si propre à l'image et formé d'autant d'impulsions que de points dans la ligne lue, ces impulsions étant respectivement représentatives des signaux fournis par les points de la ligne lue ; l'amplitude du signal de synchronisation est de - 0,3 V et l'amplitude du signal propre à l'image atteint 0,7 V.

Il est à noter que le schéma selon la figure 2 correspond au schéma d'une caméra noir et blanc à capteur solide, à l'injection du signal de salve, Ss, près.

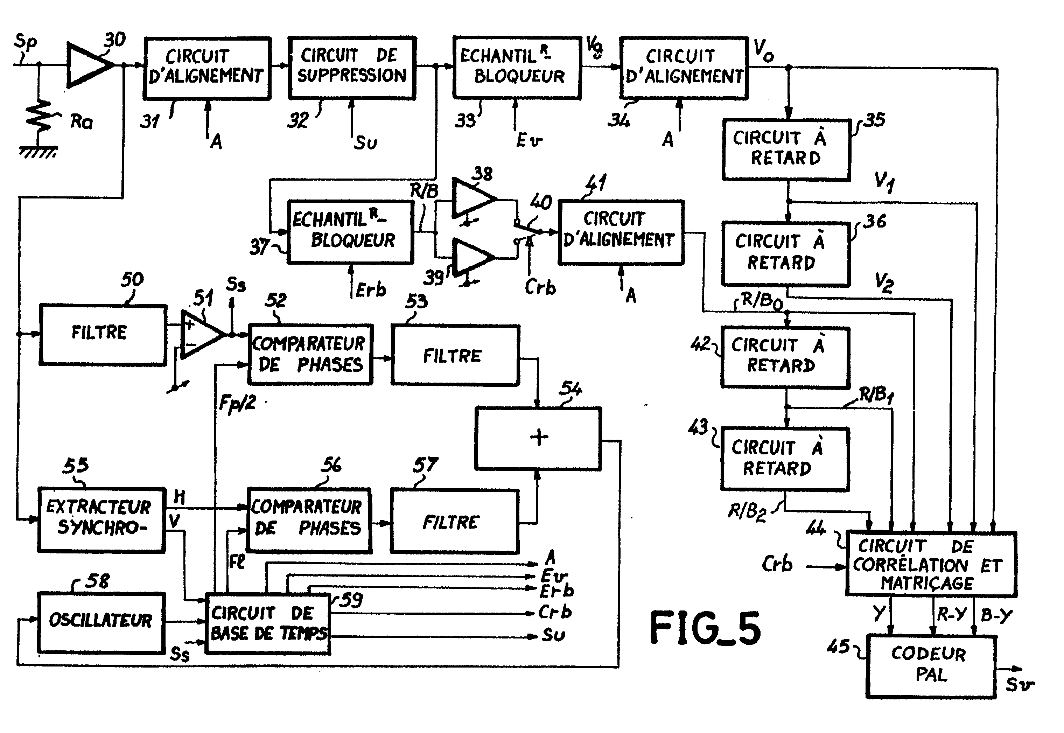

La figure 5 est un shéma détaillé des circuits de traitement 5 de la figure 1, c'est-à-dire des circuits destinés à recevoir le signal Sp fourni par l'ensemble selon la figure 2 après modulation, émission par voie hertzienne, réception et démodulation, dans les éléments 2, 3 et 4 selon la figure 1.

Le signal Sp provenant du récepteur 4 selon la figure 1, par un conducteur d'impédance caractéristique égale à 75 ohms, arrive sur la première extrémité d'une résistance d'adaptation, Ra de 75 ohms, dont la seconde extrémité est à la masse et sur l'entrée d'un amplificateur 30. L'amplificateur 30 réalise une adaptation d'impédance et donne au signal Sp un niveau suffisant pour la suite du traitement.

Le signal de sortie de l'amplificateur 30 est fourni à un circuit d'alignement (clamp dans la littérature anglo-saxonne), 31, commandé à fréquence ligne, Fl = 15,625 kHz, par une impulsion d'alignement, A, délivrée par un circuit de base de temps, 59, piloté par un oscillateur commandé en tension, 58. Le circuit de base de temps 59 est réalisé à partir des deux mêmes circuits que le générateur de signaux d'horloge (CX23047A qui donne les impulsions d'échantillonnage des circuits 33, 37, 40, 44 qi seront vus plus loin et CX7930A qui donne les signaux de synchronisation et les signaux de service).

Le signal fourni par le circuit d'alignement 31, est débarrassé des impulsions de synchronisation ligne et trame et de la salve dans un circuit de suppression 32 commandé par des impulsions de suppression, Su, fournies par le circuit de base de temps 59.

Le signal délivré par le circuit de suppression 32 est appliqué à l'entrée de deux échantillonneurs-bloqueurs 33, 37 commandés respectivement par des impulsions d'échantillonnage, Ev et Erb, fournies par le circuit de base de temps 59. Ces échantillonneurs-bloqueurs, commandés à demi-fréquence de point, $Fp/2 = 4,74$ MHz, permettent, étant donné la constitution des lignes de la grille (voir figure 3), d'extraire, pour l'échantillonneur-bloqueur 33, les signaux, Vg, relatifs aux points verts et, pour l'échantillonneur-bloqueur 37, les signaux, R/B, relatifs aux points rouges ou aux points bleus selon la ligne concernée ; il est à remarquer que les signaux d'échantillonnage Ev et Erb sont identiques à une différence de phase de 180° près car, sur une ligne, les points verts et les points rouges ou bleus alternent régulièrement un à un.

Le signal, Vg, fourni par l'échantillonneur-bloqueur 33, est aligné sur la référence au noir, dans un circuit d'alignement 34 commandé par le signal d'alignement A. Le signal $V_0$, qui est ainsi produit, est envoyé sur un circuit de corrélation et de matriçage 44 et sur un circuit à retard, 35, d'une durée de temps de retard égal à 64 µs. Le signal $V_1$ que délivre le circuit à retard 35 est appliqué au circuit 44 et à un autre circuit à retard 36, identique au circuit 35, qui fournit ainsi un signal $V_2$ retardé de $2 \times 64 = 128$ µs au circuit 44.

Le signal, R/B, c'est-à-dire le signal de points rouges ou bleus, fourni par l'échantillonneur-bloqueur 37 est appliqué à l'entrée de deux amplificateurs à gain réglable 38, 39 prévus pour faire la balance des blancs en fonction des conditions d'éclairement de la prise de vues à effectuer ; le gain de l'amplificateur 38 est réglé en fonction du niveau des rouges tandis que le gain de l'amplificateur 39 est réglé en fonction du niveau des bleus. Grâce à un commutateur 40 commandé à demi fréquence ligne par un signal en créneau, Crb, fourni par le circuit de base de temps 59, le signal délivré par l'amplificateur 38 est seul transmis à l'entrée d'un circuit d'alignement 41, lorsque les signaux traités proviennent d'une ligne "vert-rouge", tandis que le signal fourni par l'amplificateur 39 est seul transmis à l'entrée du circuit d'alignement 41 lorsque les signaux traités proviennent d'une ligne "vert-bleu". Le commutateur 40 est commandé à demi fréquence ligne, Fl/2, par le signal d'identification, Crb, qui est un signal en créneaux à niveaux hauts et bas de durées identiques, fourni par le circuit de base de temps 59.

Comme pour le signal Vg, le signal sortant du commutateur 40 est appliqué à un circuit d'alignement 41 commandé par le signal d'alignement A et suivi de deux circuits à retard 42, 43 identiques aux circuits à retard 35, 36 et branchés de façon semblable ; ainsi le circuit d'alignement 41, et les circuits à retard 42, 43 délivrent respectivement au circuit de corrélation et de matriçage 44, trois signaux $R/B_0$, $R/B_1$, $R/B_2$ décalés de 64 µs les uns par rapport aux autres et constitués d'informations représentatives soit uniquement de points rouges, soit uniquement de points bleus.

Le circuit de corrélation et matriçage 44 qui reçoit également le signal Crb, reconstitue les niveaux de bleu et de rouge dans les lignes où ils manquent grâce aux signaux des lignes adjacentes présents simultanément du fait des circuits à retard. Le circuit 44 élabore ainsi un signal de luminance, Y, et des signaux de chrominance R-Y et B-Y. Ce circuit 44 est réalisé à partir d'un circuit intégré CX20151 fabriqué par la société SONY.

Un codeur PAL, 45, reçoit les signaux Y, R-Y et B-Y et élabore le signal vidéo composite, classique, de télévision en couleurs, Sv, dont il a été question lors de la figure 1.

Les éléments Ra et 30 à 45 de la figure 5, qui viennent d'être décrits, constituent un montage classique d'élaboration d'un signal standard de télévision en couleurs à la différence près qu'il est d'habitude placé immédiatement à la sortie du circuit 17 de la figure 2 et qu'il n'y a aucun signal de salve du moins avant le codeur PAL.

Il est à noter que la détermination de la structure de la ligne du capteur optique (vert-bleu ou vert-rouge) pourrait se faire sur des différences d'amplitude ou de phase ou sur un nombre différent d'alternances entre les salves relatives à deux lignes de structures différentes ; dans l'exemple décrit, comme il a été indiqué plus avant, elle se fait à partir des impulsions de synchronisation trame. Il est également à noter que, dans le cas de l'utilisation d'un capteur comportant des lignes toutes de même structure, par exemple des lignes à points "vert-bleu-rouge" successifs, la distinction de structure n'aurait plus lieu d'être.

En dehors d'une éventuelle utilisation pour déterminer la structure de la ligne du capteur optique dont les signaux sont traités, la salve Ss a un rôle très important dans l'élaboration du signal standard de télévision, Sv, à partir du pseudo-signal de télévision Sp : elle permet l'élaboration d'un réglage très précis de la fréquence de l'oscillateur commandé en tension, 58, qui pilote le circuit de base de temps 59. L'asservissement de l'oscillateur 58 qui assure ce réglage de fréquence très précis est décrit ci-après, il est réalisé à l'aide des circuits 50 à 59 de la figure 5.

Le signal de sortie de l'amplificateur 30 est appliqué à l'entrée d'un filtre pase-bande, 50, et à l'entrée d'un circuit extracteur de synchronisation, 55.

Le filtre 50, centré sur la fréquence propre du signal de salve, c'est-à-dire sur 4,74 MHz, permet d'extraire la salve du signal Sp et de l'appliquer sur l'entrée "+" d'un comparateur d'amplitudes 51 pour une mise à niveau correct ; le comparateur 51 reçoit à cet effet, sur son entrée "-", une tension réglable.

La salve, Ss, est comparée, dans un comparateur de phases, 52, avec un signal à demi fréquence point, Fp/2 = 4,74 MHz, délivré par le circuit de base de temps 59 ; ce signal à demi fréquence point, comme d'ailleurs tous les autres signaux fournis par le circuit de base de temps 59, est élaboré à partir du signal de sortie de l'oscillateur 58.

Le signal de sortie du comparateur 52 est appliqué, à travers un filtre 53, sur la première des entrées d'un circuit additionneur 54 dont la sortie fournit la tension de commande de l'oscillateur 58. Le filtre 53, qui est en fait un filtre passe-bas associé à un réseau à avance de phase, constitue le circuit de stabilisation de la boucle d'asservissement comportant les circuits 52, 53, 54, 58 et 59.

Le circuit extracteur de synchronisation, 55, extrait, du signal Sp, les signaux de synchronisation à fréquence de trame, V, et à fréquence de ligne, H. Le signal de synchronisation à fréquence de trame (Ft = 50 Hz), V, est appliqué au circuit de base de temps 59, dans lequel il sert à la remise à zéro de la base de temps verticale et, comme il a été vu, à la remise à zéro du compteur qui délivre le signal Crb.

Le signal de synchronisation à fréquence de ligne (Fl = 15,625 kHz), H, est comparé, dans un comparateur de phases, 56, avec un signal à fréquence de ligne, Fl = 15,625 kHz, délivré par le circuit de base de temps 59. Le signal de sortie du comparateur 56 est appliqué, à travers un filtre 57, sur la seconde entrée du circuit additionneur 54. Le filtre 57 est un filtre passe-bas associé à un réseau à avance de phase ; il constitue le circuit de stabilisation de la boucle d'asservissement comportant les circuits 56, 57, 54, 58 et 59.

Ainsi l'oscillateur 58, destiné à osciller à 28,4375 MHz, est asservi, par deux boucles d'asservissement à verrouillage de phase, au signal Sp, c'est-à-dire à l'oscillateur à quartz de grande précision et de grande stabilité, associé à la caméra, qui est contenu dans le générateur de signaux d'horloge 18 de la figure 2 et dont la fréquence, Fo, est aussi de 28,4375 MHz.

Le circuit de base de temps 59, à partir du signal de l'oscillateur 58, produit par division les signaux
– d'échantillonnage point: Fo/3 (Fp)
– D'échantillonnage d'un point sur deux dans une ligne: Fo/6
– à fréquence ligne: Fo/1820 (Fl)
– à fréquence trame: Fo/568 750 (Ft = Fl/312,5)
– à fréquence image: Fo/1 137 500 (Ft/2)
et produit, à partir de ces signaux, l'ensemble des signaux de commande nécessaires au fonctionnement du montage selon la figure 5, c'est-à-dire des circuits de traitement 5 de la figure 1.

Dans la boucle d'asservissement par comparaison d'impulsions à fréquence ligne, le comparateur, 56, a une dynamique de ± 2 avec une tension de sortie variant entre 0 et 5 volts ; la dynamique est - 64 µs à + 64 µs (1/Fl = 1/15,625 kHz = 64 µs), ce qui donne 5 volts pour 128 µs, c'est-à-dire une caractéristique au de transfert de 39 µV/ns.

Dans la boucle d'asservissement en fonction de la salve Ss, le comparateur de phases 52 est identique au comparateur 56 ; la dynamique est donc - 211 ns à + 211 ns (1/4,74 MHz) et la caractéristique de transfert est de 11,8 mV/ns

Pour que le montage selon la figure 5 fonctionne correctement il est nécessaire d'obtenir une précision de l'ordre de 10 ns sur les signaux fournis par le circuit de base de temps 59 et donc que l'oscillateur 58 soit asservi avec cette même précision. Ces 10 ns d'erreur de phase tolérable correspondent à un écart de tension de 0,39mV sur la sortie du comparateur de phases 56 tandis qu'elles correspondent à un écart de tension de 118 mV sur la sortie du comparateur de phases 52 ; il y a donc un rapport de gain de 118/0,39, soit environ 300, entre les deux comparateurs et il est évident qu'il est plus facile d'obtenir une erreur inférieure à 10 ns avec le comparateur 52 qu'avec le comparateur 56. Par contre le comparateur 52 ayant une dynamique de ± 211 ns, alors que celle du comparateur 56 est de ± 64 µs, la remise en phase des débuts de ligne ne peut être effectuée qu'à l'aide du comparateur 56.

Les deux boucles d'asservissement comportant respectivement les comparateurs 52 et 56 sont donc complémentaires : celle à fréquence ligne, avec le comparateur 56, se charge de remettre les signaux de synchronisation ligne en phase tandis que celle à demi fréquence point, avec le comparateur 52, a une précision suffisante pour assurer un écart de phase inférieur à 10 ns.

Il est à remarquer que la boucle comportant le comparateur 52 est une boucle échantillonnée puisque le signal de salve ne dure que 3 µs toutes les 64 µs mais cela ne pose pas un problème car, comme cela a déjà été mentionné plus avant, l'oscillateur associé à la caméra étant à grande stabilité n'introduit pas de dérive de fréquence ou de phase et l'erreur à compenser est une erreur statique variant nettement plus lentement que la période d'échantillonnage de la boucle d'asservissement sur le signal de salve.

En plus des variantes déjà mentionnées, d'autres variantes peuvent être conçues sans sortir du cadre de l'invention, c'est ainsi que la fréquence propre de la salve pourrait être sans rapport avec la fréquence point mais, qu'en général, pour des raisons de commodité, ces deux fréquences seront dans un rapport simple (x ou 1/x avec x entier égal à 1 ou voisin de 1). Il est également à remarquer que la correction de gamma peut être effectuée dans les circuits de traitement 5 (figure 1) et que les signaux de salve peuvent éventuellement n'être associés qu'à une partie des lignes lues, par exemple à une ligne de trame sur deux.

Il est également possible d'avoir deux circuits de base de temps distincts : l'un, pour les signaux Ev et Erb de commande des échantillonneurs-bloqueurs 33, 37, serait piloté par un oscillateur asservi uniquement par le signal fourni par le comparateur 52 (comparaison sur la salve) et l'autre, pour l'ensemble des autres signaux, serait piloté par un oscillateur asservi uniquement par le signal fourni par le comparateur 56 (comparaison sur la synchronisation ligne).

## Revendications

1. Procédé d'élaboration d'un signal standard de télévision en couleurs à partir d'une caméra munie d'un capteur solide comportant plusieurs lignes d'éléments photosensibles ou points, caractérisé en ce qu'il consiste à fournir un pseudo-signal (Sp) formé de lignes et de trames dont les amplitudes et les durées et les impulsions de ligne et de trame sont comparables à celles d'un signal standard de télévision, et comportant, pour chaque ligne de capteur lue, une zone de suppression avec une impulsion de synchronisation ligne (Iy), puis des impulsions d'image (Si) respectivement représentatives des signaux fournis par les points de la ligne de capteur lue, en ce qu'il consiste, au moins pour une partie des lignes de capteur lues, à introduire dans la zone de suppression une salve à une fréquence propre très supérieure à la fréquence de répétition des lignes du pseudo-signal, et en ce qu'il consiste, après émission et réception du pseudo-signal, à élaborer une base de temps précise à l'aide des impulsions de synchronisation (H, V) et à l'aide de la salve (Ss) et à élaborer le signal standard (Sv) à partir des impulsions d'image.

2 Procédé selon la revendication 1, caractérisé en ce que, les points de la ligne de capteur étant lus à une fréquence donnée (Fp), la fréquence donnée et la fréquence propre de la salve sont dans un rapport simple.

3. Procédé selon l'une quelconque des revendications précédentes, caractérisé en ce qu'il consiste à élaborer la base a de temps à partir d'un dispositif oscillateur (58) contrôlé par les résultats de la comparaison en phase des impulsions de synchronisation ligne d'une part et de la salve d'autre part avec respectivement des signaux de base de temps à la fréquence ligne (Fl) et à la fréquence propre de la salve (Fp/2).

4. Partie émission d'une chaîne de prise de vues de télévision en couleurs comportant, en série, une caméra munie d'un capteur solide à plusieurs lignes d'éléments photosensibles ou points (13), des circuits électroniques (14-19) et un émetteur (2), caractérisée en ce que les circuits électroniques comportent : un circuit additionneur (17) dont la sortie est couplée à l'émetteur, un générateur de signaux d'horloge (18) couplé au capteur pour déterminer une lecture en trames, ligne par ligne à une fréquence point donnée (Fp) des lignes du capteur et pour fournir au circuit additionneur des impulsions de synchronisation ligne et trame et, avec au moins certaines des impulsions de synchronisation ligne, une salve à une fréquence propre (Fp/2) très supérieure à la fréquence des impulsions de synchronisation ligne (Fl), et des circuits de prétraitement (14-16) couplés au capteur pour fournir à l'additionneur, pour chaque ligne lue, des impulsions respectivement représentatives des signaux fournis par les points de la ligne de capteur lue.

5. Partie réception d'une chaîne de prise de vues de télévision en couleurs comportant, en série, un récepteur (4) et des circuits de traitement (5), caractérisée en ce que, les circuits de traitement (5) recevant un pseudo-signal (Sp) formé de signaux de trames et de lignes avec des impulsions de synchronisation trame et ligne, avec, pour chaque ligne, des impulsions respectivement représentatives de signaux fournis par les points d'une ligne de capteurs solide et avec, pour au moins certaines lignes du pseudo signal, une salve à une fréquence propre (Fp/2) très supérieure à la fréquence des impulsions de synchronisation ligne (F/l), elle comporte une base de temps (59) pilotée par un dispositif oscillateur (58) commandé par des comparateurs de phases (52, 56) dont l'un (56) compare les phases des impulsions de synchronisation ligne reçues (H) avec des signaux à fréquence ligne (Fl) fournis par la base de tempset dont l'autre (52) compare les salves reçues (Ss) avec des signaux à fréquence propre de la salve (Fp/2) fournis par la base de temps.

## Patentansprüche

1. Verfahren zur Entwicklung eines Standard-Farbfernsehsignals aus einer Kamera, die mit einem eine Mehrzahl von Zeilen von lichtempfindlichen Elementen oder Punkten umfassenden Festkörpersensor versehen ist, gekennzeichnet durch die Lieferung eines Pseudosignals (Sp), das aus Zeilen und Teilbildern, deren Amplituden und Dauern und deren Zeilen- und Teilbild-Impulse mit denjenigen eines Standard-Fernsehsignals vergleichbar sind, gebildet wird und für jede gelesene Zeile des Sensors eine Zone zum Austasten mit einem Zeilen-Synchronisationsimpuls (Iy) umfaßt,

die darauf folgende Lieferung von Bildimpulsen (Si), die jeweils die von den Punkten der gelesenen Zeile des Sensors gelieferten Signale darstellen,

die Eingabe eines Chrominanzsignals mit einer weit oberhalb der Wiederholfrequenz der Zeilen des Pseudosignals liegenden Eigenfrequenz in die Austastzone für wenigstens einen Teil der gelesenen Zeilen des Sensors und

die Entwicklung einer genauen Zeitablenkung mit Hilfe der Synchronisationsimpulse (H, V) und mit Hilfe des Chrominanzsignals (Ss) und die Entwicklung des Standardsignals (Sv) aus den Bildimpulsen nach der Aussendung und dem Empfang des Pseudosignals.

2. Verfahren gemäß Anspruch 1, dadurch gekennzeichnet, daß die Punkte der Sensorzeile mit einer gegebenen Frequenz (Fp) gelesen werden, wobei die gegebene Frequenz und die Eigenfrequenz des Chrominanzsignals in einer einfachen Beziehung stehen.

3. Verfahren gemäß einem der vorangehenden Ansprüche, gekennzeichnet durch die Entwicklung der Zeitablenkung aus einer Oszillatorvorrichtung (58), die anhand der Ergebnisse des in der Phase übereinstimmenden Vergleichs der Zeilensynchronisationsimpulse einerseits und des Chrominanzsignals andererseits mit den die Zeilenfrequenz (Fl) bzw. die Eigenfrequenz des Chrominanzsignals (Fp/3) aufweisenden Zeitablenkungssignalen gesteuert wird.

4. Sendeteil einer Farbfernseh-Bildaufnahmekette, die in Reihenschaltung eine mit einem Festkörpersensor mit einer Mehrzahl von Zeilen von lichtempfindlichen Elementen oder Punkten (13) versehene Kamera, elektronische Schaltungen (14 bis 19) und einen Sender (2) umfaßt,

dadurch gekennzeichnet, daß die elektronischen Schaltungen eine Addierschaltung (17), deren Ausgang mit dem Sender verbunden ist,

einen Taktsignalgenerator (18), der mit dem Sensor verbunden ist, um ein teilbildweises Lesen der Sensorzeilen Zeile für Zeile mit einer gegebenen Punktfrequenz (Fp) festzulegen und um an die Addierschaltung Zeilen- und Teilbildsynchronisationsimpulse und wenigstens mit bestimmten Zeilensynchronisationsimpulsen ein Chrominanzsignal mit einer weit oberhalb der Frequenz der Zeilensynchronisationsimpulse (Fl) liegenden Eigenfrequenz (Fp/2) zu liefern, und

Vorbearbeitungsschaltungen (14 bis 16), die mit dem Sensor verbunden sind, um an die Addierschaltung für jede gelesene Zeile die Impulse zu liefern, die jeweils die von den Punkten der gelesenen Zeile des Sensors gelieferten Signale darstellen, umfassen.

5. Empfangsteil einer Farbfernseh-Bildaufnahmekette, die in Reihenschaltung einen Empfänger (4) und Bearbeitungsschaltungen (5) umfaßt, dadurch gekennzeichnet, daß die Bearbeitungsschaltung (5) ein Pseudosignal (Sp) empfängt, das aus Teilbild- und Zeilensignalen mit Teilbild- und Zeilen-Synchronisationsimpulsen, mit jeweils die von den Punkten einer Zeile des Festkörpersensors gelieferten Signale darstellenden Impulsen für jede Zeile und mit einem Chrominanzsignal mit einer weit oberhalb der Frequenz der Zeilensynchronisationsimpulse (F/l) liegenden Eigenfrequenz (Fp/2) gebildet wird und

das Empfangsteil eine Zeitablenkung (59) umfaßt, die von einer von Phasenkomparatoren (52, 56) gesteuerten Oszillatorvorrichtung (58) gesteuert wird, wobei einer der Phasenkomparatoren (56) die Phasen der empfangenen Zeilensynchronisationsimpulse (H) mit den von der Zeitablenkung gelieferten Signalen mit der Zeilenfrequenz (Fl) und der andere Phasenkomparator (52) die empfangenen Chrominanzsignale (Ss) mit den von der Zeitablenkung gelieferten Signalen mit der Eigenfrequenz des Chrominanzsignals (Fp/2) vergleicht.

**Claims**

1. A method for processing a standard color television signal from a camera having a solid state image sensor comprising a plurality of lines of photosensitive elements or dots, characterized in that it consists of supplying a pseudo signal (Sp) made up of lines and frames whose amplitudes and durations and line and frame pulses are comparable with those of a standard television signal, and comprises, for each sensor line read, a suppression zone with a line sync pulse (ly), then image pulses (Si) respectively representing signals supplied by the dots of the read camera line, in that it comprises, at least as regards a part of the read lines of the camera, introducing a burst into the suppression zone, a burst at an inherent frequency considerably greater than the repetition frequency of the lines of the pseudo signal, and in that it comprises, after emission and reception of the pseudo signal, elaborating a precise time base with the aid of sync pulses (H and V) and with the aid of the burst (Ss) and elaborating the standard signal (Sv) starting from the image pulses.

2. The method as claimed in claim 1, characterized in that the dots of the line of the camera are read at a given frequency (Fp) and the given frequency and the inherent frequency of the burst bei a simple relationship.

3. The method as claimed in either of the preceding claims, characterized in that it consists of elaborating the time base starting with an oscillator means (58) controlled by the results of the phase comparison of line sync pulses on the one hand and of the burst on the other hand with, respectively, the time base signals at the line frequency (Fl) and at the inherent frequency of the burst (Fp/2).

4. A transmitting part of a color television picture taking arrangement, comprising, placed in series, a camera provided with a solid state image sensor with a plurality of lines of photosensitive elements or dots (13), electronic circuits (14 through 19) and a transmitter (2), characterized in that the electronic circuits comprise: an adder circuit (17) whose output is coupled with the transmitter, a clock signal generator (18) coupled with the sensor in order to determine frame-wise reading, line by line at a given point frequency (Fp) of the lines of the sensor and to furnish the adding circuit with line and frame sync pulses and, with at least some of the line sync pulses, a burst at an inherent frequency (Fp/2) very much greater than the frequency of the line sync pulses (Fl), and pretreatment circuits (14 through 16) coupled with the sensor in order to furnish to the adder, for each line read, pulses respectively representative of the signals furnished by the points of the sensor line which is read.

5. A receiving part of a color television picture taking arrangement, comprising, placed in series, a receiver (4) and treatment circuits (5), characterized in that in that the treatment circuits (5) receive a pseudo signal (Sp) formed by frame and line signals with frame and line sync pulses with, for each line, pulses respectively representative of signals furnished by the points of a line of solid state sensors and with, for at least some lines of the pseudo signal, a burst at an inherent frequency (Fp/2) very much greater than the frequency of the line sync pulses (F/1) and it furthermore comprises a time base (59) triggered by an oscillator means (58) controlled by phase comparators (52 and 56) of which one (56) compares the phases of the line sync pulses (H) received with the line frequency signals (F1) furnished by the time base and of which the other one (52) compares the bursts (Ss) received with signals at the inherent frequency of the burst (Fp/2) furnished by the time base.

8

# FIG_1

# FIG_3

FIG_2

EP 0 254 622 B1

# FIG_4

+0,7V

3µs

Si

Ss

0 V

Iy

-0,3V

4,7µs

12µs

64µs

EP 0 254 622 B1

FIG_5

EP 0 254 622 B1